Europäisches Patentamt

European Patent Office

Office européen des brevets

(11) Publication number: **0 471 324 A2**

# EUROPEAN PATENT APPLICATION

(21) Application number: **91113509.3**

(22) Date of filing: **12.08.91**

(51) Int. Cl.⁵: **C09D 183/08**, C09K 3/18, C08G 77/24

(30) Priority: **13.08.90 JP 213925/90**

(43) Date of publication of application:
**19.02.92 Bulletin 92/08**

(84) Designated Contracting States:
**DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Harashima, Asao**
**6,1-chome, Yushudai Nishi**
**Ichihara-shi, Chiba(JP)**
Inventor: **Shindo, Shuji**
**6,1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Water-repellant composition.**

(57) The present invention relates to a water-repellent composition which can impart a superior water repellency to various types of hard-surface materials such as metals, plastics, and so forth. The water-repellent composition contains an organic solvent-soluble organopolysiloxane resin comprising: (A) $C_nF_{2n+1}RSiO_{3/2}$ units; (B) $R^1_3SiO_{1/2}$ units; and (C) $SiO_{4/2}$ units; wherein R is an alkylene radical, $R^1$ is an alkyl radical, and n is an integer of from 1 to 10; provided the molar ratio of units (A + B)/C has a value of 0.60 to 2.10.

The present invention relates to a water-repellent composition and, more particularly, relates to a water-repellent composition which can impart a superior water repellency to various types of hard-surface materials such as metals, plastics, and so forth.

Numerous organopolysiloxane resin-based water-repellent compositions are already known. For example, Japanese Patent Publication Number 02-9066 [9,066/90] discloses a water-repellent composition which is based on methylpolysiloxane resin made up of the $(CH_3)_2SiO$ unit, $SiO_{4/2}$ unit, and $(CH_3)_3SiO_{1/2}$ unit. This is the condensation product obtained from dimethylchlorosiloxy- terminated linear dimethylpolysiloxane, tetraethyl silicate, and trimethylchlorosilane. Japanese Patent Application Laid Open [Kokai or Unexamined] Number 59-140280 [140,280/84] discloses a water-repellent composition whose main component is organopolysiloxane resin obtained by the co-hydrolysis/ condensation of perfluoroalkyl-containing alkoxysilane with aminoalkyl-containing alkoxysilane, etc.

However, the films formed by these water-repellent compositions are characterized by poor film properties, and the water repellency deteriorates when materials treated with these compositions are subjected to long-term exposure to severe or hostile ambients. Moreover, they produce films which pick up dirt and stains rather easily, and this contamination, once Picked up, is difficult to clean off by washing with water, etc.

The present inventors carried out extensive investigations directed at solving the above-described problems, and they discovered that these problems could be solved in a single stroke through the use of a special organopolysiloxane resin as the base for a water-repellent composition. The present invention was achieved based on this discovery.

The present invention takes as its object the introduction of a water-repellent composition which not only evidences a superior water repellency, but which can sustain such a water-repelling performance even in the face of long-term exposure to a severe or hostile ambient.

The aforesaid object is achieved by means of a water-repellent composition containing an organic solvent- soluble organopolysiloxane resin comprising:

(A) $C_nF_{2n+1}RSiO_{3/2}$ units;

(B) $R^1_3SiO_{1/2}$ units; and

(C) $SiO_{4/2}$ units;

wherein R is an alkylene radical, $R^1$ is an alkyl radical, and n is an integer of from 1 to 10; provided the molar ratio of units

(A + B)/C has a value of 0.60 to 2.10.

The organopolysiloxane resin constitutes the base or main ingredient of the composition, and it comprises a perfluoroalkyl- substituted organopolysiloxane resin which is made up of

(A) $C_nF_{2n+1}RSiO_{3/2}$ units;

(B) $R^1_3SiO_{1/2}$ units; and

(C) $SiO_{4/2}$ units.

The unit (A) occurring in the organopolysiloxane resin is the unit which characterizes or distinguishes the present invention, and this unit functions to impart water repellency to the composition according to the present invention. Unit (A) is a trifunctional unit (T unit) which contains the perfluoroalkyl group. R in the preceding formula is an alkylene group as exemplified by methylene, ethylene, propylene, butylene, and so forth. $R^1$ in the preceding formula is an alkyl group as exemplified by methyl, ethyl, propyl, butyl, and so forth. The letter n is an integer of from 1 to 10. The unit (A) under consideration is exemplified by the

$CF_3$-$CH_2CH_2$-$SiO_{3/2}$ unit,

$C_2F_5$-$CH_2CH_2$-$SiO_{3/2}$ unit,

$C_3F_7$-$CH_2CH_2$-$SiO_{3/2}$ unit, and

$C_4F_9$-$CH_2CH_2CH_2$-$SiO_{3/2}$ unit.

The unit (B) is an alkyl-containing monofunctional unit (M unit), and this is a blocking unit which occurs at the molecular terminals of the organopolysiloxane resin. This unit functions to impart water repellency to the present invention's composition.

The unit (C) is a tetrafunctional unit (Q unit): it functions to increase the film strength for the composition according to the present invention and it also functions to improve the persistence or durability of the water repellency. Because the units (A) through (C) each have the respective functions described above, it is essential to produce the proper balance with regard to their molar proportions in the composition according to the present invention. At a minimum, the (unit A + unit B)/unit C molar ratio must fall within the range of 0.60 to 2.10. The water repellency is degraded then this molar ratio assumes values below 0.60. On the other hand, at values in excess of 2.10, the water-repellent film formed by the present invention's composition has a reduced strength and the persistence of the water repellency will be reduced. It will also be advantageous within the context of the present invention for the molar proportions of units (A) through (C) to satisfy the following conditions: unit (A) should be present within the range of 0.01 moles to 1.40 moles per 1 mole unit (C) and unit (B) should be present within the range of 0.40 moles to 2.00 moles per 1 mole unit (C).

While the organopolysiloxane resin used in the present invention should be composed of the aforementioned units (A) through (C), small quantities of the following may be present in addition to units (A) through (C) as long as the object of the present invention is not compromised: difunctional units (D units), i. e., $R^2_2SiO$ units (wherein $R^2$ is an alkyl group as for $R^1$ above), and/or alkoxy groups such as methoxy, ethoxy, etc. The organopolysiloxane resin employed by the present invention can be easily prepared by running a condensation reaction, in organic solvent in the presence of a condensation-reaction catalyst, between specified quantities of a known organopolysiloxane resin composed of $R^1_3SiO_{1/2}$ units and $SiO_{4/2}$ units (MQ resin) and perfluoroalkyl-containing organoalkoxysilane with the formula

$$C_nF_{2n} + {}_1RSi(OR^1)_3.$$

The water-repellent composition according to the present invention is preferably applied in a formulation in which the aforesaid organopolysiloxane resin is dissolved in any of various organic solvents. Suitable solvents in this regard are exemplified by benzene, toluene, xylene, isoparaffin, mineral spirits, kerosene, and so forth.

As long as the object of the present invention is not compromised, the water-repellent composition according to the present invention may contain colorants, UV absorbers, and so forth.

When the water-repellent composition according to the present invention is applied by such means as spraying, brushing, dipping, or rubbing, to the surface of various types of hard-surface materials, such as metals, plastics, wood, and so forth, a water-repellent film is formed on the particular surface from the organopolysiloxane resin. The water-repellent film of this organopolysiloxane resin evidences a large contact angle relative to water and has an excellent water repellency. Moreover, it resists the uptake or adhesion of carbon-based microdust and therefore has an excellent resistance to staining.

As a consequence, the water-repellent composition according to the present invention is highly qualified for use as a water-repellent composition where such properties are critical. The present invention is explained in greater detail below through illustrative examples. In these examples, parts = weight parts, and Me = methyl. The water-repellency persistence test and the stain-removal test were conducted by the following methods:

Water-repellency persistence test.

To prepare the water-repellency test specimen, the organopolysiloxane resin-based water-repellent composition was uniformly coated on an aluminum plate (7.4 cm x 15.0 cm) to give a film. Five microliters of distilled water was then dripped onto the surface of this film and the contact angle was measured. This water-repellency test specimen was exposed to a water shower (water discharge rate = 30 L/minute) and was then subjected to a 10 minute cleaning procedure in an ultrasonic cleaner filled with 1 weight% aqueous dodecylbenzene solution. After this, it was removed, washed one time with water, then dried. Five microliters distilled water was again dripped onto this test specimen as above, and the contact angle was measured.

Stain-removal test 3 Parts fuel soot (brandname: Nissho Black, from Nippon Shoen Kabushiki Kaisha) and 1 part polyoxyethylene lauryl ether (HLB: 13) were dispersed in 46 parts distilled water. One cc of this water-based fuel soot dispersion was dripped onto the surface of a water-repellency test specimen prepared as described under the water-repellency persistence test, and it was spread out using a No. 10 bar coater. The specimen was dried in an oven for 1 hour at approximately 50 degrees Centigrade and then cleaned by repeated rubbing for 5 minutes in water. The specimen was then dried, and the degree of staining or soiling was evaluated by a five-member panel. The degree of soiling was evaluated according to the following scale.

    5 :      presents the same appearance as before staining
    4 :      slight presence of a striped pattern
    3 :      presence of a striped pattern
    2 :      a partially blackened stained surface is produced
    1 :      a stained surface is produced which is blackened over its entirety

**EXAMPLE I**

The following were charged to a flask equipped with a stirrer, thermometer, and condenser: 25.6 parts methylpolysiloxane resin composed of the $Me_3SiO_{1/2}$ unit and $SiO_{4/2}$ unit (molar ratio = 1.0 : 1.0, hydroxyl group content = 2.0 weight%), 70 parts isoparaffin (initial boiling point = 175 degrees Centigrade, brandname: Isozol 300, from Nippon Sekiyu Kabushiki Kaisha), 4.4 parts 3,3,3- trifluoropropyltrimethoxysilane, and 0.15 parts dibutyltin dilaurate. A condensation reaction was run for 9 hours at 100 degrees Centigrade to afford a homogeneous transparent liquid. This transparent liquid was analyzed by gas chromatography, and it was found that the 3,3,3-trifluoropropyltrimethoxysilane peak had been completely extinguished.

The volatile components were then removed from this transparent solution, and the obtained reaction product was analyzed by infrared absorption spectroscopy (IR) and nuclear magnetic resonance analysis (NMR). It was established that this organopolysiloxane resin reaction product was a polysiloxane resin composed of the $CF_3CH_2CH_2SiO_{3/2}$ unit, $Me_3SiO_{1/2}$ unit, and $SiO_{4/2}$ unit in a molar ratio of 0.13 : 1.0 : 1.0, that is, an organopolysiloxane resin with the following chemical structure.

$$(CF_3CH_2CH_2SiO_{3/2})_{0.13} (Me_3 SiO_{1/2})_{1.0} (SiO_{4/2})_{1.0}$$

The transparent solution was coated on aluminum plate (7.4 cm x 15 cm), and a transparent film was formed by drying for 10 minutes in a hot-air circulation oven held at 50 degrees Centigrade.

This transparent film-coated aluminum plate, serving as test specimen, was subjected to the water-repellency persistence test and stain-removal test. These measurement results are reported in Table 1 below.

## EXAMPLE II

The following were charged to a flask equipped with a stirrer, thermometer, and condenser: 22.3 parts methylpolysiloxane resin composed of the $Me_3SiO_{1/2}$ unit and $SiO_{4/2}$ unit (molar ratio = 1.0 : 1.0, hydroxyl group content = 2.0 weight%), 70 parts isoparaffin (initial boiling point = 175 degrees Centigrade, brandname: Isozol 300, from Nippon Sekiyu Kabushiki Kaisha), 7.7 parts 3,3,3- trifluoropropyltrimethoxysilane, and 0.20 parts dibutyltin dioctoate. A condensation reaction was run for 9 hours at 100 degrees Centigrade to afford a homogeneous transparent liquid. This transparent liquid was analyzed by gas chromatography, and it was found that the 3,3,3-trifluoropropyltrimethoxysilane peak had been completely extinguished.

The volatile components were then removed from this transparent solution, and the obtained reaction product was analyzed by infrared absorption spectroscopy (IR) and nuclear magnetic resonance analysis (NMR). It was established that this organopolysiloxane resin reaction product was a trifluoropropyl group-containing polysiloxane resin with the following chemical structure.

$$(CF_3CH_2CH_2SiO_{3/2})_{0.27} (Me_3SiO_{1/2})_{1.0} (SiO_{4/2})_{1.0}$$

The transparent solution was coated on aluminum plate (7.4 cm x 15 cm), and a transparent film was formed by drying for 10 minutes in a hot-air circulation oven held at 50 degrees Centigrade.

This transparent film-coated aluminum plate, serving as test specimen, was subjected to the water-repellency persistence test and stain-removal test. These measurement results are reported in Table 1 below.

## EXAMPLE III

The following were charged to a flask equipped with a stirrer, thermometer, and condenser: 27.6 parts methylpolysiloxane resin composed of the $Me_3SiO_{1/2}$ unit and $SiO_{4/2}$ unit (molar ratio = 1.0 : 1.0, hydroxyl group content = 2.0 weight%), 70 parts xylene, 2.4 parts 3,3,3-trifluoropropyltrimethoxysilane, and 0.20 parts dibutyltin dioctoate. A condensation reaction was run for 9 hours at 100 degrees Centigrade to afford a homogeneous transparent liquid. This transparent liquid was analyzed by gas chromatography, and it was found that the 3,3,3-trifluoropropyltrimethoxysilane peak had been completely extinguished.

This transparent solution was analyzed by IR and NMR, and it was established that this organopolysiloxane resin reaction product was a polysiloxane resin with the following chemical structure.

EP 0 471 324 A2

$(CF_3CH_2CH_2SiO_{3/2})_{0.06} (Me_3SiO_{1/2})_{1.0} (SiO_{4/2})_{1.0}$

This transparent solution was coated on aluminum plate (7.4 cm x 15 cm), and a transparent film was formed by drying for 10 minutes in a hot-air circulation oven held at 50 degrees Centigrade.

This transparent film-coated aluminum plate, serving as test specimen, was subjected to the water-repellency persistence test and stain-removal test. These measurement results are reported in Table 1 below.

**EXAMPLE IV**

The following were charged to a flask equipped with a stirrer, thermometer, and condenser: 30 parts methylpolysiloxane resin composed of the $Me_3SiO_{1/2}$ unit and $SiO_{4/2}$ unit (molar ratio = 1.0 : 1.0), 70 parts xylene, 2.8 parts methyltrimethoxysilane, and 0.20 parts dibutyltin dioctoate. A condensation reaction was run for 9 hours at 100 degrees Centigrade to afford a homogeneous transparent liquid. This transparent solution was analyzed by NMR, and it was established to be a methylpolysiloxane resin with the following chemical structure.

$(CH_3SiO_{3/2})_{0.13} (Me_3SiO_{1/2})_{1.0} (SiO_{4/2})_{1.0}$

This transparent solution was coated on aluminum plate (7.4 cm x 15 cm), and a transparent film was formed by drying for 10 minutes in a hot-air circulation oven held at 50 degrees Centigrade.

This transparent film-coated aluminum plate, serving as test specimen, was subjected to the water-repellency persistence test and stain-removal test. These measurement results are reported in Table 1 below.

**TABLE I**

| PROPERTIES | EXAMPLE I | EXAMPLE II | EXAMPLE III | EXAMPLE IV |
|---|---|---|---|---|
| water-repellency persistence test | | | | |
| contact angle before cleaning (degrees) | 123 | 120 | 121 | 118 |
| contact angle after cleaning (degrees) | 115 | 120 | 100 | 85 |
| stain-removal test | 4 | 4 | 3 | 2 |

Because the water-repellent composition according to the present invention is based on an organopolysiloxane resin which is composed of the units (A) through (C), the former is characterized both by an excellent water repellency and by the persistence or durability of its water-repellent performance even in the face of long-term exposure to a hostile ambient. Moreover, it resists staining, and the stains, once taken up, are easily cleaned off by washing with water, etc.

It will be apparent from the foregoing that many other variations and modifications may be made in the structures, compounds, compositions and methods described herein without departing substantially from the essential features and concepts of the present invention. Accordingly, it should be clearly understood that the forms of the invention described herein are exemplary only and are not intended as limitations on the scope of the present invention.

5

**Claims**

1. A water-repellent composition containing an organic solvent-soluble organopolysiloxane resin comprising:

   (A) $C_nF_{2n+1}RSiO_{3/2}$ units;

   (B) $R^1_3SiO_{1/2}$ units; and

   (C) $SiO_{4/2}$ units;

   wherein

   R is an alkylene radical, $R^1$ is an alkyl radical, and n is an integer of from 1 to 10; provided the molar ratio of units (A + B)/C has a value of 0.60 to 2.10.

2. The organic solvent-soluble organopolysiloxane resin of Claim 1 wherein component (A) is selected from the group consisting of

   $CF_3$-$CH_2CH_2$-$SiO_{3/2}$, $C_2F_5$-$CH_2CH_2$-$SiO_{3/2}$,

   $C_3F_7$-$CH_2CH_2$-$SiO_{3/2}$, $C_4F_9$-$CH_2CH_2CH_2SiO_{3/2}$ and mixtures thereof, wherein component (B) is $(CH_3)_3SiO_{1/2}$ abd the sum of components (A) + (B) + (C) is at least 70 mole percent of the organic solvent-soluble organopolysiloxane resin.

3. A water-repellent composition of claim 1 containing an organic solvent-soluble organopolysiloxane resin comprising:

   (A) 0.01 to 1.40 moles of $CF_3CH_2CH_2SiO_{3/2}$;

   (B) 0.40 to 2.00 moles of $(CH_3)_3SiO_{1/2}$; and

   (C) 1.00 mole of $SiO_{4/2}$;

   wherein the molar ratio of units (A + B)/C has a value of 0.60 to 2.10; provided the sum of components (A) + (B) + (C) is at least 70 mole percent of the organic solvent-soluble organopolysiloxane resin.